(19) Europäisches Patentamt / European Patent Office / Office européen des brevets

(11) **EP 4 768 863 A1**

(12) **EUROPEAN PATENT APPLICATION**

(43) Date of publication:
01.07.2026 Bulletin 2026/27

(21) Application number: 25222563.6

(22) Date of filing: **11.12.2025**

(51) International Patent Classification (IPC):
**G01C 21/20** (2006.01)   **G06T 7/73** (2017.01)
**G06V 10/40** (2022.01)   **G06V 10/56** (2022.01)
**G08G 3/00** (2006.01)

(52) Cooperative Patent Classification (CPC):
**G01C 21/203; G06T 7/66;** G06T 7/73;
G06T 2207/10024; G06T 2207/20036; G06V 10/40;
G06V 10/56

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.12.2024 JP 2024231717**

(71) Applicant: Yanmar Holdings Co., Ltd.
**Osaka-shi, Osaka (JP)**

(72) Inventors:
• **DAKE, Yuichiro**
  Osaka (JP)
• **WADA, Suisei**
  Osaka (JP)
• **MIZOGUCHI, Yusuke**
  Osaka (JP)
• **WAKABAYASHI, Isao**
  Osaka (JP)

(74) Representative: **Novagraaf International SA
Chemin de l'Echo 3
1213 Onex, Geneva (CH)**

(54) **NAVIGATION SUPPORT DEVICE, SHIP, NAVIGATION SUPPORT METHOD, AND NAVIGATION SUPPORT PROGRAM**

(57) [Problem] A position of a horizon can be detected based on an identification result of a light of an other ship even in the nighttime by using an image acquired by a visible light camera.

[Solution] A navigation support device that supports navigation of a ship includes a light detector. The light detector detects a light based on color information included in an image acquired by the visible light camera.

FIG. 1

**Description**

TECHNICAL FIELD

The present invention relates to a navigation support device, a ship, a navigation support method, and a navigation support program.

BACKGROUND ART

In the related art, a method of detecting a position of a horizon using luminance values of pixels included in a camera image has been proposed (for example, see Patent Document 1).

PRIOR ART DOCUMENT

PATENT DOCUMENT

Patent Document 1: Japanese Unexamined Patent Application Publication No. 2002-216139

SUMMARY OF INVENTION

TECHNICAL PROBLEM

In an image captured in the daytime, a region of the sky in an image is brighter (has higher luminance) than a region of the sea. Therefore, a position of a horizon can be detected based on a luminance change at a boundary between the sky region and the sea region. On the other hand, in an image captured in the nighttime, an entire image is dark, and a luminance change at the boundary between the sky region and the sea region in the image is small. Therefore, a position detection of the horizon based on the luminance change becomes difficult. That is, a conventional method of detecting a position of a horizon based on a luminance change is limited to the daytime, and is difficult to apply in the nighttime. Therefore, it is desired to realize a method capable of detecting a position of a horizon even in the nighttime. Moreover, for example, an infrared camera is more expensive than a visible light camera, and thus, in order to detect a position of a horizon without using such an expensive camera, it is desired to realize a method capable of identifying a light of an other ship and solve the difficulty of detecting the horizon in the nighttime by using a result of the identification.

The present invention has been made to solve the above problem, and a main object of the present invention is to enable a light of an other ship to be identified even in the nighttime by using an image acquired by a visible light camera, and an object of the present invention is to provide a navigation support device, a ship, a navigation support method, and a navigation support program that can detect a position of a horizon based on a result of the identification.

SOLUTION TO PROBLEM

According to an aspect of the present invention, a navigation support device that supports navigation of a ship includes a light detector that detects a light based on color information included in an image acquired by a visible light camera.

According to an other aspect of the present invention, a ship includes the navigation support device described above.

According to a further aspect of the present invention, a navigation support method for supporting navigation of a ship includes detecting a light based on color information included in an image acquired by a visible light camera.

According to a still further aspect of the present invention, a navigation support program causes a computer to execute the navigation support method described above.

ADVANTAGEOUS EFFECTS OF INVENTION

With the above configuration, a position of a horizon can be detected based on an identification result of a light of an other ship even in the nighttime by using an image acquired by a visible light camera.

BRIEF DESCRIPTION OF DRAWINGS

FIG. 1 is a block diagram schematically illustrating a configuration of a ship including a navigation support device according to an embodiment of the present invention.

FIG. 2 is a flowchart illustrating a flow of a process performed by a navigation support method.

FIG. 3A is an explanatory diagram illustrating an example of an image that is acquired by a visible light camera in the daytime and displayed on a display section.

FIG. 3B is an explanatory diagram illustrating an example of a histogram generated by a day/night determiner.

FIG. 4 is a flowchart illustrating a flow of a light detection process.

FIG. 5A is a flowchart illustrating a flow of a process performed by an IMU in a nighttime horizon detection process.

FIG. 5B is an explanatory diagram schematically illustrating an image acquired by the visible light camera located horizontally.

FIG. 5C is an explanatory diagram schematically illustrating an image acquired by the visible light camera inclined downward.

FIG. 6A is a flowchart illustrating a flow of a process performed by the navigation support device in the nighttime horizon detection process.

FIG. 6B is an explanatory diagram schematically illustrating a camera image including a plurality of lights.

FIG. 6C is an explanatory diagram illustrating a regression line (horizon) obtained by a least squares method.

FIG. 7 is an explanatory diagram illustrating both the regression line and a straight line estimated as a horizon by the IMU.

FIG. 8A is a flowchart illustrating a flow of a ship detection process.

FIG. 8B is an explanatory diagram schematically illustrating an example of a plurality of partial images extracted from an image.

FIG. 8C is an explanatory diagram schematically illustrating a region where a ship detected from a partial image by a ship detector is positioned.

FIG. 9 is an explanatory diagram illustrating an example of positional information of the detected ship on an image.

FIG. 10 is an explanatory diagram illustrating an example of a display screen of the display section which displays a horizon, a distance, and the like.

FIG. 11 is an explanatory diagram schematically illustrating the relationship between a camera position and a height of a person who is an object.

FIG. 12 is an explanatory diagram schematically illustrating the positional relationship between an upper limit position and a lower limit position of a horizon set in advance in an image and a detected horizon.

FIG. 13A is an explanatory diagram illustrating a front camera image and a side camera image in a normal state where the ship is not rocking and in a state where a bow side is inclined downward.

FIG. 13B is an explanatory diagram schematically illustrating a distance from the person to a horizon when the person is standing on the earth.

FIG. 14A is an explanatory diagram schematically illustrating an image before the detected horizon is corrected.

FIG. 14B is an explanatory diagram schematically illustrating an image after the detected horizon is corrected.

DESCRIPTION OF EMBODIMENTS

A description will hereinafter be made on an embodiment of the present invention with reference to the accompanying drawings.

1. Overview of Ship

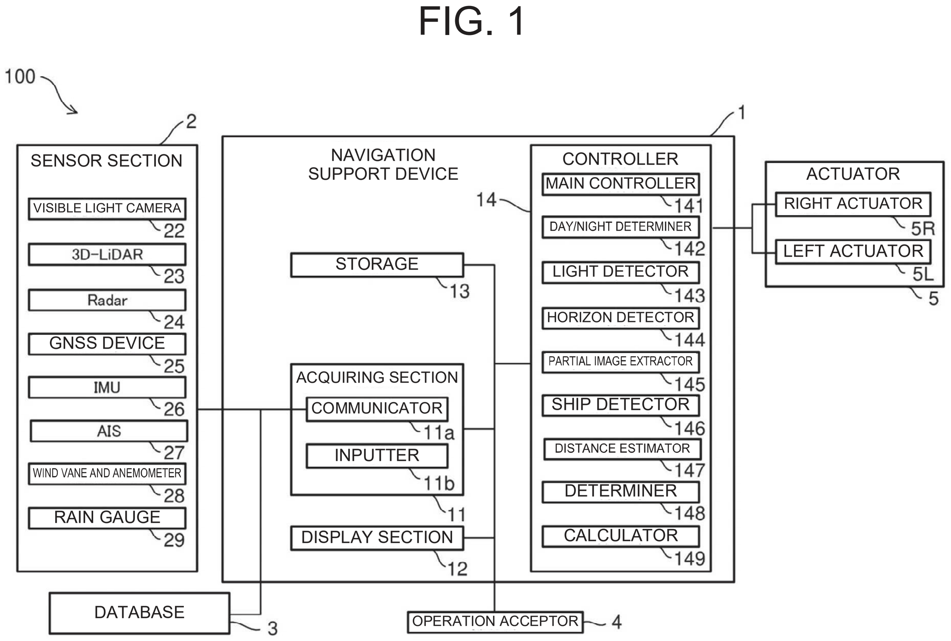

FIG. 1 is a block diagram schematically illustrating a configuration of a ship 100 according to this embodiment. The ship 100 includes a navigation support device 1. The navigation support device 1 is provided to support navigation of the ship 100. In particular, the navigation support device 1 detects a horizon based on a camera image regardless of day or night (constantly for 24 hours), and monitors a region in the vicinity of the detected horizon to detect an other ship navigating offshore. Thus, a ship operator can predict the risk of collision with the other ship or determine a course of the own ship (ship 100) by looking at a position of the other ship.

The navigation support device 1 may be provided integrally with the ship 100 or may be provided separately from the ship 100. In the latter case, the navigation support device 1 may be configured as a portable communication terminal and communicate with the ship 100 in a wired or wireless manner. A laptop computer, a tablet computer, or the like may be used as the communication terminal. The navigation support device 1 will be described in detail below.

In this embodiment, a type of the ship 100 is not particularly limited. For example, the ship 100 may be a cargo ship, a fishing boat, a sightseeing vessel, a passenger ship, or the like. The ship 100 may be an oceangoing vessel or a coastal vessel. The term "oceangoing vessel" refers to a ship that travels on international routes. The term "coastal vessel" refers to a ship that travels only on domestic routes. The navigation support device 1 of this embodiment can be applied to the ship 100 that navigates offshore away from a coastal area, regardless of whether the ship 100 is an oceangoing vessel or a coastal vessel.

2. Configuration of Ship Other than Navigation Support Device

The ship 100 includes a sensor section 2. The sensor section 2 includes a visible light camera 22, a 3D-light detection and ranging (3D-LiDAR) 23, a radio detecting and ranging (Radar) 24, a global navigation satellite system (GNSS) device 25, an inertial measurement unit (IMU) 26, an automatic identification system (AIS) 27, a wind vane and anemometer 28, and a rain gauge 29.

The visible light camera 22 is configured by a multi-camera array, for example. The multi-camera array is configured by arranging nine cameras having a narrow angle of view (for example, an angle of view of 15° to 20°) in a circumferential direction. Therefore, it is possible to acquire a captured image in a range of 90° in a right-left direction (180° in total in a circumferential direction) with a front being a center. Note that the number of the cameras constituting the multi-camera array is not limited to nine but only needs to be set appropriately. The captured image may be a still image that is acquired by imaging in a predetermined cycle, or may be a video that is acquired by continuous imaging.

The 3D-LiDAR 23 emits pulsed light and thereby detects presence or absence of a surrounding object (including an obstacle) with reflected light. When an object is present in the surroundings, the 3D-LiDAR 23 detects an azimuth of and a distance to the object based on a direction of the pulsed light at a time of receiving the reflected light and a period of time until the light is received. The 3D-LiDAR 23 is configured by three-dimensional LiDAR that performs angular scanning in a yaw direction (a right-left azimuth angle direction) and a pitch direction (a front-rear tilt angle direction). Accordingly, when an object is present in the surroundings, the 3D-LiDAR 23 outputs three-dimensional point cloud data that represents the object.

The Radar 24 detects a surrounding object by using a radio wave, a wavelength of which is longer than that of visible light, and measures a distance to the surrounding object. More specifically, the Radar 24 measures a distance to a far object based on a period of time from emission of a radio wave to the far object to reception of a reflected wave.

The 3D-LiDAR 23 uses an electromagnetic wave, a wavelength of which is much shorter than that of the radio wave of the Radar 24. For example, ultraviolet light, visible light, near-infrared light, or the like is used. Accordingly, although the 3D-LiDAR 23 has a narrower object detection range than the Radar 24, the 3D-LiDAR 23 can detect a surrounding object at high resolution. On the contrary, the Radar 24 can detect a surrounding object coarsely over a wide range.

The GNSS device 25 receives GNSS radio waves from a satellite and performs a known positioning calculation to acquire information on a current position of the ship 100. The GNSS positioning may be solely performed. However, by further using real-time kinematic (RTK) positioning, positional information of the ship 100 can be acquired with high accuracy.

The IMU 26 is an inertial measurement unit that includes a three-axis gyroscopic sensor and a three-direction accelerometer. By detecting a three-dimensional angular velocity and three-dimensional acceleration, the IMU 26 can detect pose information of the ship 100. The pose information includes positional information in each of a yaw direction, a pitch direction, and a roll direction (a right-left tilt angle direction) of the ship 100.

In this embodiment, when the nine cameras constituting the visible light camera 22 are divided into a total of three sets of three cameras, one IMU 26 is provided for each set. That is, a total of three IMUs 26 are provided. A pose of the camera and a pose of the ship 100 can be detected by the individual IMUs 26. Therefore, the IMUs 26 constitute a pose detector that detects a pose of the visible light camera 22.

The AIS 27 is an automatic ship identification system. In detail, the AIS 27 automatically transmits/receives information on an identification mark, a type, a position, a course, a speed, a navigation state, and other safety-related information of the ship 100 by very-high frequency (VHF) band radio waves. In this way, the information is exchanged between ship stations and between a ship station and a navigation service facility of a land station or the like. The wind vane and anemometer 28 is installed on the ship 100 to measure a wind direction and a wind speed. The rain gauge 29 is installed on the ship 100 to measure a quantity of precipitation.

The ship 100 further includes a database 3. The database 3 stores various types of information. The various types of information include sailing route information, nautical chart information, and weather information. The database 3 is configured by a server computer that includes a storage device, such as a hard disk, an optical disk, or a nonvolatile memory, but may be configured by a cloud server virtually existing on the Internet.

The ship 100 further includes an operation acceptor 4 and an actuator 5. The operation acceptor 4 includes, for example, an operation lever and an operation button. The ship operator can operate the actuator 5 by operating the operation acceptor 4.

The actuator 5 has a right actuator 5R and a left actuator 5L. The right actuator 5R is provided at a right stern of the ship 100. The left actuator 5L is provided at a left stern of the ship 100.

The right actuator 5R and the left actuator 5L are included in a propulsion system in which an engine installed inboard and a drive unit installed outboard are directly connected to each other. Such a propulsion system is also referred to as a sterndrive (an inboard/outboard drive). Each of the right actuator 5R and the left actuator 5L includes a rotation mechanism capable of moving the drive unit to change a propulsion direction. In this embodiment, the two actuators 5 are installed in the right and left of the ship 100. However, the number of actuators 5 is not particularly limited and may be one, three, or more. The actuator 5 may have a rudder behind a propeller driven by the engine.

3. Configuration of Navigation Support Device

The navigation support device 1 includes an acquiring section 11, a display section 12, a storage 13, and a controller 14.

The acquiring section 11 includes a communicator 11a and an inputter 11b. The communicator 11a is an interface for communication with the outside. The communication may be made in the wired or wireless manner. Accordingly, the communicator 11a may include a connector, to which a communication cable is connected, in preparation for the wired communication. Furthermore, the communicator 11a may include an antenna, a transmission/reception section, a modulation circuit, and a demodulation circuit in preparation for the wireless communication.

In this embodiment, the communicator 11a is communicably connected to the sensor section 2 and the database 3 described above. In this way, information detected by the sensor section 2 and information recorded in the database 3 can be input to the navigation support device 1 via the communicator 11a.

The inputter 11b accepts a designated input (hereinafter, simply referred to as an input) by a user. Such an inputter 11b includes a touch panel, a mouse, or a keyboard, for example. When the inputter 11b includes the touch panel, the inputter 11b may be arranged on a front surface of the display section 12 while being integrated with the display section 12. In the case where the navigation support device 1 is mounted on the ship 100, a ship operator can be the user.

The display section 12 is a display (monitor) that shows various types of information, and includes a liquid-crystal display device, for example. In particular, in this embodiment, the display section 12 displays an image acquired by the above-described visible light camera 22.

The storage 13 is a memory that stores various types of information, and is constituted by a random access memory (RAM), a read only memory (ROM), a hard disk, an optical disk, a nonvolatile memory, or the like. The storage 13 stores, in addition to an operation program of the controller 14, data obtained by processing in the controller 14, data acquired via the acquiring section 11 (for example, data of an image captured by the visible light camera 22), and the like.

The controller 14 is configured to include, for example, at least one of a central processing unit (CPU) and a graphics processing unit (GPU) capable of performing high-speed processing. The controller 14 operates in accordance with an operation program stored in the storage 13. The controller 14 includes a main controller 141, a day/night determiner 142, a light detector 143, a horizon detector 144, a partial image extractor 145, a ship detector 146, a distance estimator 147, a determiner 148, and a calculator 149. Note that any one of the main controller 141, the day/night determiner 142, the light detector 143, the horizon detector 144, the partial image extractor 145, the ship detector 146, the distance estimator 147, the determiner 148, and the calculator 149 may be configured by a CPU or a GPU that is separate from the controller 14 (may be provided outside the controller 14).

The main controller 141 controls operations of the individual sections of the navigation support device 1. For example, the main controller 141 controls display of information on the display section 12. The main controller 141 controls the actuator 5 (the right actuators 5R and the left actuators 5L) based on an operation of the operation acceptor 4. Functions of the day/night determiner 142 and the like will be described together in the following description of the operations.

4. Navigation Support Method

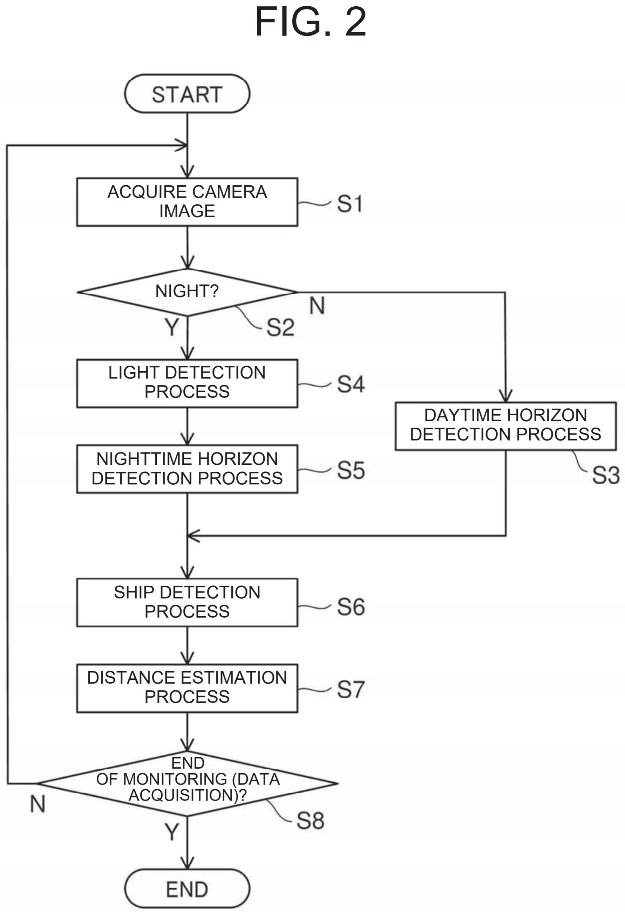

Next, a navigation support method of this embodiment will be described. The navigation support method of this embodiment is a method for supporting navigation of the ship 100, and is executed by the above-described navigation support device 1. FIG. 2 is a flowchart illustrating a flow of a process performed by the navigation support method of this embodiment. In this embodiment, by performing the process along the flowchart of FIG. 2, a horizon is detected regardless of day or night, and an other ship is detected based on the detected horizon.

4-1. Image Acquisition and Day/Night Determination Process

When the acquiring section 11 of the navigation support device 1 acquires an image acquired by the visible light camera 22 (S1), the day/night determiner 142 determines day or night based on color information included in the image (S2). Here, as the color information described above, image data of each pixel included in a color image (original image) acquired by the visible light camera 22, specifically, image data of red (R), green (G), and blue (B) is considered. More specifically, image data after gamma correction (brightness correction) is performed on the RGB image data will be considered.

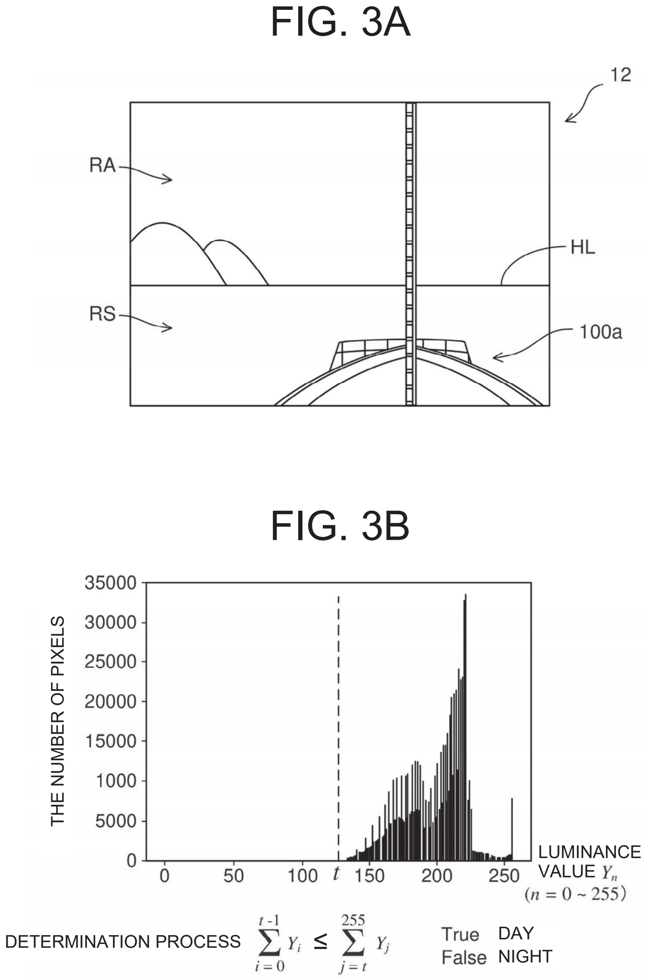

FIG. 3A illustrates an example of an image that is acquired by imaging a front of the ship 100 with the visible light camera 22 in a daytime and is displayed on the display section 12. The image includes a bow image 100a that is an image of a bow portion of the own ship, a sky region RA, and a sea region RS. A boundary between the sky region RA and the sea region RS indicates a horizon HL. The day/night determiner 142 obtains a luminance value of each pixel from the color information of each pixel constituting the image of FIG. 3A, and generates a histogram indicating the relationship between the luminance value and the number of pixels. FIG. 3B is an example of a histogram generated by the day/night determiner 142 based on the color information.

A luminance value Y on a horizontal axis is calculated based on following Expression (A). Note that RGB in Expression (A) is, for example, data of 8-bit data of 0 (dark) to 255 (bright). Values of coefficients K1 to K3 in Expression (A) are examples, and the coefficients are not limited to these values.

$$Y = K1 \cdot R + K2 \cdot G + K3 \cdot B \ldots (A)$$

However, K1 = 0.299, K2 = 0.587, and K3 = 0.114.

The day/night determiner 142 compares the total number of pixels whose luminance value Y is equal to or more than a threshold value t (high-luminance side total number) with the total number of pixels whose luminance value Y is less than the threshold value t (low-luminance side total number). Note that the threshold value t may be, for example, 128, which is an intermediate value between 0 and 255, but may be set to any value. When the high-luminance side total number is equal to or more than the low-luminance side total number, the day/night determiner 142 determines that an image is acquired (image capturing) in the daytime, whereas when the high-luminance side total number is less than the low-luminance side total number, the day/night determiner 142 determines that an image is captured at in the nighttime. Note that, in an expression indicating the determination process illustrated in FIG. 3B, the left side indicates the low-luminance side total number, and the right side indicates the high-luminance side total number.

4-2. Daytime Horizon Detection Process

In the day/night determination process in step S2 in FIG. 2, when it is determined that an image is captured in the daytime, the horizon detector 144 performs a daytime horizon detection process (S3). For example, by configuring the horizon detector 144 with a horizon detector capable of machine learning by deep learning, a horizon can be detected from an image in the daytime. A technique of detecting a horizon using deep learning is disclosed in, for example, Document A "Vision-Based Maritime Object Detection Covering Far and Tiny Obstacles", Ryota Yoneyama, Yuichiro Dake, IFAC-PapersOnLine, Volume 55, Issue 31, 2022, Pages 210-215". That is, the known technique disclosed in Document A described above may be used for the daytime horizon detection. Note that, in the daytime, luminance rapidly changes at the boundary between the sky region RA and the sea region RS. Thus, in the daytime, the horizon detector 144 may detect, based on luminance values of individual pixels, a region where luminance rapidly changes to obtain a horizon.

4-3. Light Detection Process

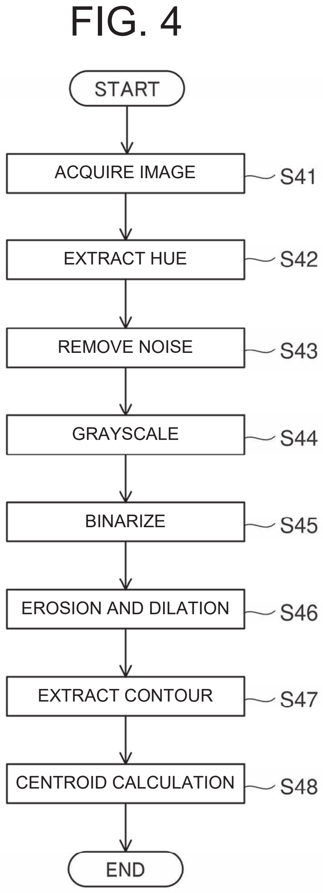

When it is determined that an image is captured in the nighttime in the day/night determination process in step S2, the light detector 143 performs a light detection process (S4). FIG. 4 is a flowchart illustrating a flow of a light detection process. The light detector 143 detects a light based on color information included in an image acquired by the visible light camera 22. Note that, in the light detection process, unlike the day/night determination process, RGB image data of an original image that has not been subjected to the luminance correction by the gamma correction is used as the color information. The light detection process will be described in detail below with reference to FIG. 4.

When the acquiring section 11 acquires image data of the original image from the visible light camera 22 (S41), the light detector 143 extracts hue information from the image data (S42). That is, the light detector 143 extracts R, G, and B image data pieces from the image data of the original image. In general, there are three types of lights that a ship turns on in the nighttime: a port light (red), a starboard light (green), and a mast light (white). By acquiring the respective R, G, and B image data pieces from the original image as described above (particularly, by separately acquiring the R and G image data pieces), a light of a ship can be reliably detected.

Then, the light detector 143 performs a noise reduction process on the hue information (R, G, and B image data pieces) acquired in step S42 (S43). For example, among the R, G, and B image data pieces, an image data piece having an extremely high numerical value may have noise. The light detector 143 can accurately perform light detection by performing a process of removing, as noise, an image data piece having a predetermined value or more.

Then, the light detector 143 converts R, G, and B image data pieces from which noise has been removed in step S43 into grayscale image data pieces (S44). This grayscaling may be performed by calculating the luminance values Y of the individual pixels using, for example, Expression (A) used in the day/night determination process of step S2 in FIG. 2.

Then, the light detector 143 binarizes, using a threshold value, the image data (luminance data) of the individual pixels that has been converted into the grayscale in step S44 (S45). For example, the light detector 143 sets image data equal to or more than the threshold value to "1" and sets image data less than the threshold value to "0".

Then, the light detector 143 performs a known erosion process and a known dilation process on the image having the binarized image data (S46). Thus, the noise of the image is further reduced. In the erosion process, when pixels (for example, eight pixels) around a pixel of interest include at least one black pixel (image data is "0"), image data of the pixel of interest is converted into black data "0". On the other hand, in the dilation process, when the pixels around the pixel of interest include at least one white pixel (image data is "1"), image data of the pixel of interest is converted into white data "1".

Then, the light detector 143 performs a known contour extraction process on the image subjected to the erosion process and the dilation process in step S46 (S47). By the contour extraction process, a boundary representing a shape of an object (here, a region indicating a light) included in the image is extracted as a contour of the object. Finally, the light detector 143 calculates and acquires a centroid of the object from coordinates of pixels constituting the contour of the object extracted in step S47 (S48). An acquired position of the centroid (position coordinates) indicates a position of the light. The light included in the image is detected as described above.

4-4. Nighttime Horizon Detection Process

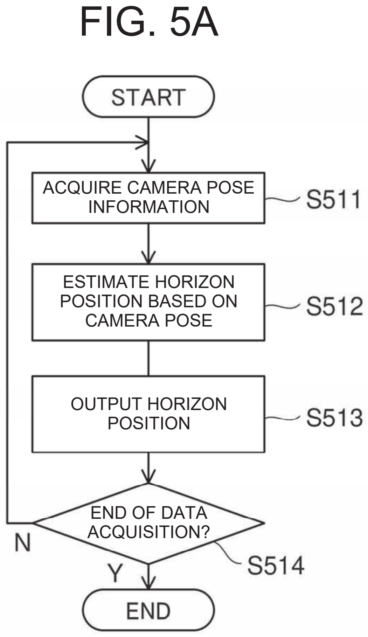

After the light detection process in step S4 in FIG. 2 is performed, the horizon detector 144 performs a nighttime horizon detection process (S5). FIG. 5A is a flowchart illustrating a flow of the nighttime horizon detection process, which is processing performed by the IMU 26 (refer to FIG. 1). When acquiring pose information of the visible light camera 22 (S511), the IMU 26 estimates a position of the horizon based on the pose information (S512).

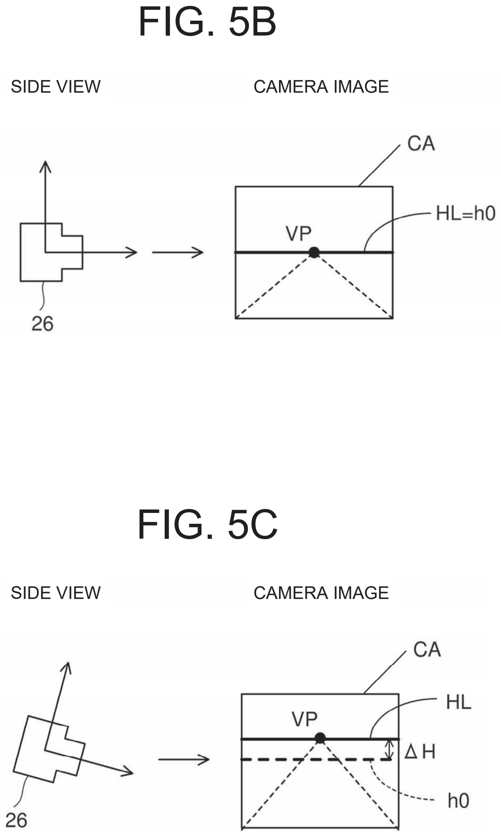

For example, FIG. 5B schematically illustrates a side view of the visible light camera 22 and an image CA (also referred to as a camera image) acquired by the visible light camera 22 in a case where the visible light camera 22 is located horizontally. As illustrated in FIG. 5B, when the visible light camera 22 is located horizontally, a horizon HL is located at a central position h0 (passing through a vanishing point VP) in an up-down direction in the camera image.

FIG. 5C schematically illustrates a side view of the visible light camera 22 and a camera image in a case where the visible light camera 22 is tilted downward due to the ship 100 shaking. An upward displacement amount ΔH (corresponding to a pixel size × the number of pixels) from a center position h0 of the horizon HL in the camera image obtained when the visible light camera 22 is inclined downward by a predetermined angle is known in advance. Therefore, the IMU 26 can estimate a position of the horizon HL in the camera image from the acquired camera image (from the pose of the visible light camera 22).

In step S512, the positional information of the horizon HL estimated by the IMU 26 is output from the IMU 26 to the navigation support device 1 (S513). The above process is repeatedly performed (S514) until monitoring (data acquisition) is finished.

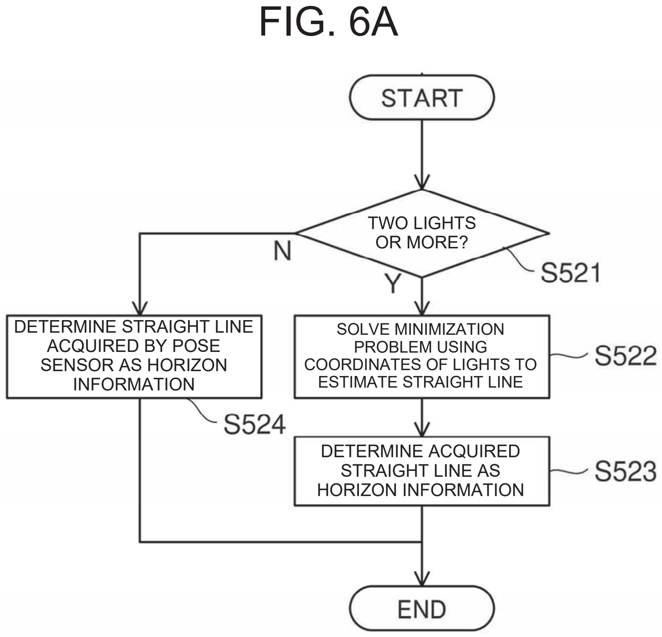

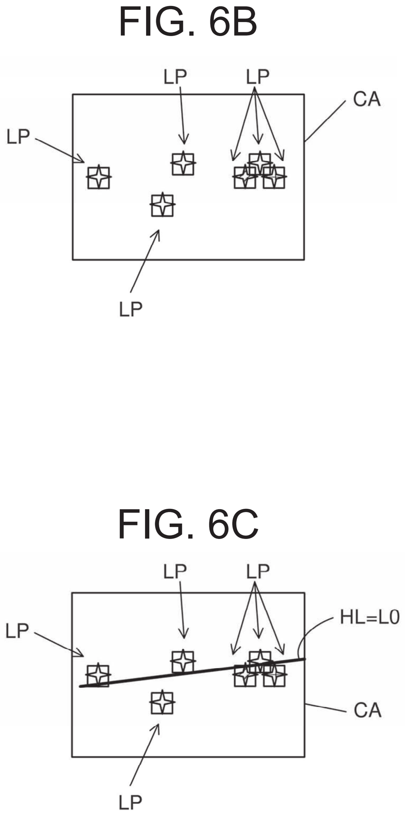

FIG. 6A is a flowchart illustrating a flow of a process performed by the navigation support device 1 in the nighttime horizon detection process. The horizon detector 144 determines whether one camera image includes two or more lights detected in the light detection process of step S4 in FIG. 2 (S521). When it is determined that the image includes two or more lights in step S521, the horizon detector 144 solves a minimization problem from coordinates of the plurality of lights (position coordinates of centroids) to estimate a straight line L0 that can be approximated to the horizon HL (S522). For example, as illustrated in FIG. 6B, when the camera image includes a plurality of lights LP, the horizon detector 144 obtains a regression line (= straight line L0) passing through the vicinity of the individual lights LP by using the least squares method, as illustrated in FIG. 6C. Then, the horizon detector 144 sets the obtained straight line L0 as information of the horizon HL (S523).

On the other hand, when the number of lights is less than two in step S521, the straight line L0 may not be obtained by the least-squares method (the straight line L0 may not be specified), and thus the horizon detector 144 sets the positional information output by the IMU 26 in the process of FIG. 5A (S513) as information on the horizon HL (S524).

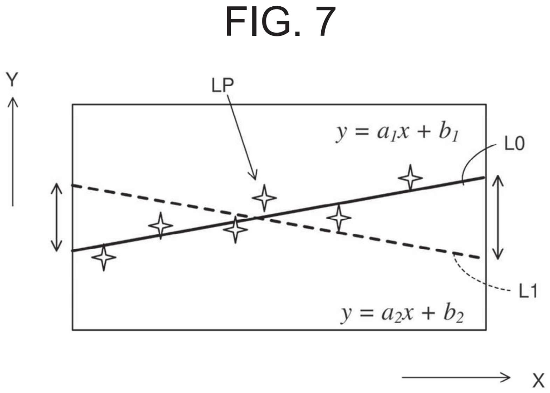

Note that, as illustrated in FIG. 7, when a difference between the straight line L0 (refer to a solid line) obtained in step S522 and a straight line L1 (refer to a broken line) corresponding to the positional information output by IMU 26 is large, the horizon detector 144 may redo the horizon detection process from the beginning without adopting the obtained straight line L0. The case where the difference between the two straight lines L0 and L1 is large refers to a case where, when one straight line L0 is represented by a linear function of $y = a1x + b1$ and the other straight line L1 is represented by a linear function of $y = a2x + b2$, a difference between slopes a1 and a2 is equal to or more than a predetermined value or a difference between intercepts b1 and b2 is equal to or more than a predetermined value.

4-5. Ship Detection Process

When a horizon is detected in step S3 or step S5 in FIG. 2, the partial image extractor 145 and the ship detector 146 perform a ship detection process (S6). In the ship detection process, an other ship located near the horizon is detected. This will be described in more detail below.

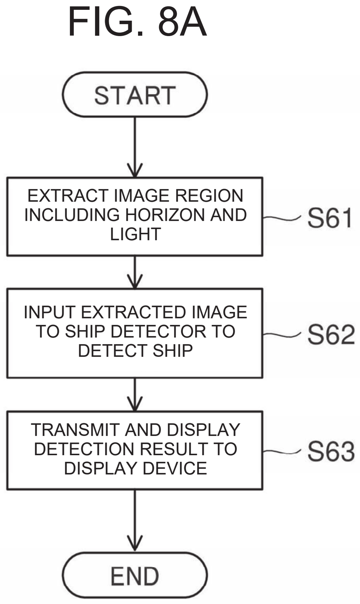

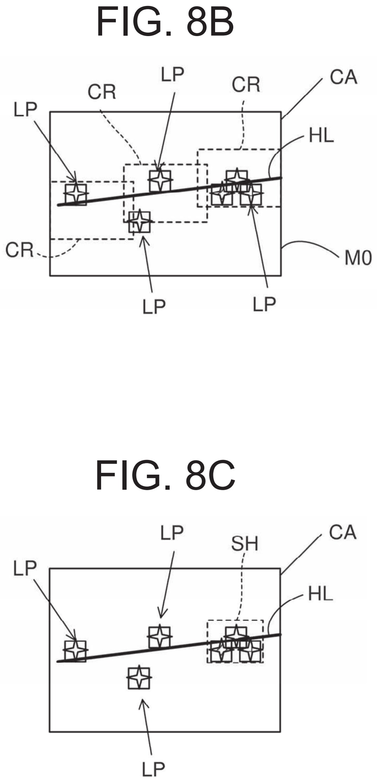

FIG. 8A is a flowchart illustrating a flow of the ship detection process. First, as illustrated in FIG. 8B, the partial image extractor 145 extracts a plurality of partial images CR from an image CA including lights LP (S61). Each of the partial images CR refers to an image region that includes a corresponding one of the lights LP and overlaps with the horizon HL (straight line L0 or L1) in one image CA. That is, the partial image extractor 145 extracts, from the image CA including the lights, the partial images CR that include the lights and overlap with the horizon HL. Note that it is assumed that two adjacent partial images CR on the image CA are extracted so as to overlap with each other at their respective ends. By extracting image regions overlapping with the horizon HL, the partial images CR focusing on only the horizon portion are obtained.

Subsequently, the ship detector 146 receives the partial images CR extracted by the partial image extractor 145, and detects a ship SH from the received image (S62). That is, when the extracted partial images CR are input, the ship detector 146 detects an other ship included in the partial images CR. Such detection of an other ship can be performed by configuring the ship detector 146 with a ship detection device on which machine learning has been performed in advance by deep learning. In FIG. 8C, a region where the ship SH detected from the partial images CR by the ship detector 146 is located is schematically indicated by a rectangular broken line.

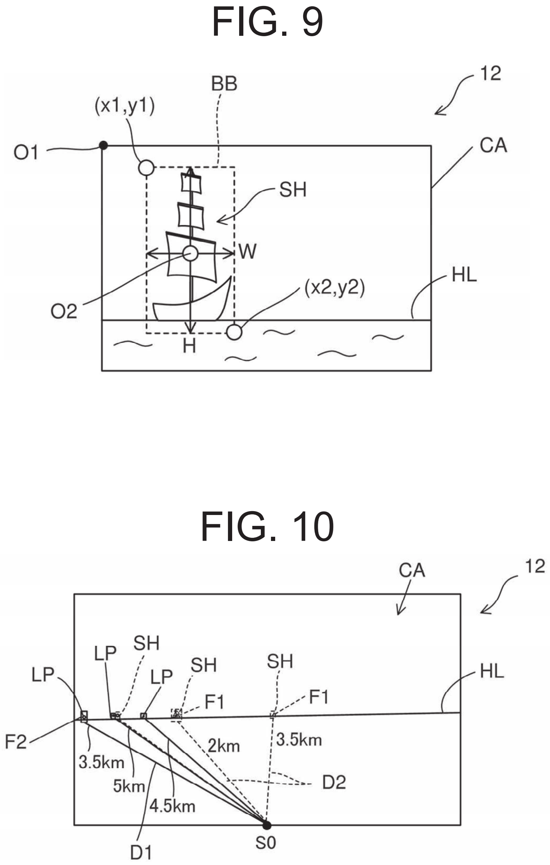

Here, the detection of the ship SH (the other ship) refers to acquisition of positional information of the ship SH on the image CA. The positional information is, for example, as illustrated in FIG. 9, positional information (coordinates (x1, y1)) of an upper left point and positional information (coordinates (x2, y2)) of a lower right point of a rectangle BB (bounding box) surrounding the ship SH when an arbitrary point O1 of the image CA (for example, the upper left point of the image CA) is used as a reference. Since positions (coordinates) of the partial images CR in the image CA have been obtained, when the ship SH is detected in an arbitrary one of the partial images CR, a position of the ship SH with respect to the point O1 of the image CA is uniquely determined. The positional information of the ship SH may be positional coordinates of a center O2 of the rectangle BB with respect to the reference point O1, and numerical values of a height H and a width W of the rectangle BB.

Thereafter, the ship detector 146 transmits a result of the detection of the ship SH to the display section 12 and displays the detection result on the display section 12 (S63). FIG. 10 is a diagram schematically illustrating an example of a display screen of the display section 12. In FIG. 10, an example is illustrated in which the display section 12 displays the lights LP detected in step S4 in FIG. 2, ships SH detected in step S62 in FIG. 8A, and the horizon HL detected in step S5 in FIG. 2 together. To clearly distinguish the ships SH from the lights LP, the display section 12 displays first frames F1 surrounding the ships SH in, for example, green to highlight the ships SH, and displays second frames F2 surrounding the lights LP in, for example, red to highlight the lights LP.

Since the light detection process is not performed in the daytime, the following may be performed when the ship detection process is performed in the daytime. That is, the partial image extractor 145 may extract, from the image CA, a plurality of partial images CR overlapping with the horizon HL (the straight line L0 or L1). Then, the ship detector 146 may detect ships from the input image by using, as an input, the individual partial images CR extracted by the partial image extractor 145.

4-6. Distance Estimation Process

Next, as illustrated in FIG. 10, the distance estimator 147 estimates distances D1 between the lights LP and the own ship S0 (the ship 100) based on relative positions between the horizon HL and the lights LP (S7). Furthermore, the distance estimator 147 estimates distances D2 between the other ships (the ships SH) and the own ship S0 (ship 100) based on relative positions between the horizon HL and the other ships (the ships SH). Note that, as a specific method of estimating the distances D1 and D2, for example, a technique described in Document B "Ando Hiroaki, Hironobu Fujiyoshi, "A Method for Estimation of 3D Position and Camera Self-Calibration Using Results of Human Detection", IEEJ Transactions on Industry Applications, vol. 131, No. 4, pp. 482-489, Apr. 1, 2011 Online ISSN 1348-8163" can be used.

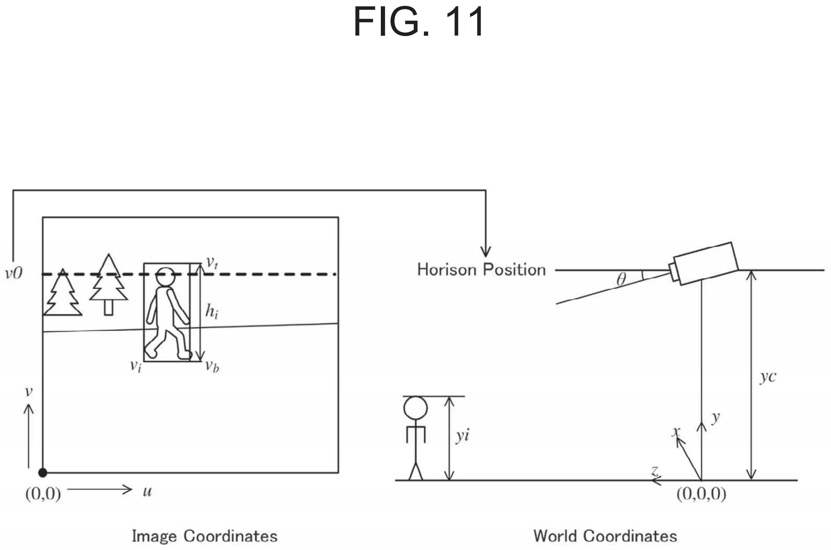

The distance estimation method according to the technique described in Document B will be briefly described below. FIG. 11 is an explanatory diagram schematically illustrating the relationship between a camera position and a height of a person who is an object. Lower left coordinates of the image are denoted by (0, 0), and a coordinate system of a normalized image obtained by normalizing a length and a width of the image by a size of a longitudinal width of the image is denoted by (u, v). On the other hand, the world coordinate system is given as (x, y, z). It is assumed here that y is a height, z is a depth, and a direction perpendicular to a yz plane is x. Then a tilt angle (inclination angle from a horizontal plane) of the camera is denoted by $\theta$, a focal length is denoted by f, coordinates of a camera center are denoted by (uc, vc), and a height of the camera is denoted by yc. In the world coordinate system, zc = 0 and xc = 0 are defined with reference to a camera position, and a ground plane is defined as y = 0. A horizon v0 is defined as a vanishing line of the ground in the image coordinate system.

The tilt angle $\theta$ of the camera is expressed by the following Expression (1).

Math. 1

$$\theta = 2\arctan\frac{v_c - v_0}{2f} \qquad \cdots (1)$$

The transformation from the world coordinate system to the image coordinate system is performed by the following Expression (2).
Math. 2

$$\begin{bmatrix} u \\ v \\ 1 \end{bmatrix} = \frac{1}{z}\begin{bmatrix} f & 0 & u_c \\ 0 & f & v_c \\ 0 & 0 & 1 \end{bmatrix}\begin{bmatrix} 1 & 0 & 0 & 0 \\ 0 & \cos\theta & -\sin\theta & y_c \\ 0 & \sin\theta & \cos\theta & 0 \end{bmatrix}\begin{bmatrix} x \\ y \\ z \\ 1 \end{bmatrix} \qquad \cdots (2)$$

When Expression (2) is solved for the height y of the object, the following Expression (3) is obtained.
Math. 3

$$y = \frac{z(f\sin\theta - (v_c - v)\cos\theta) - fy_c}{(v_c - v)\sin\theta + f\cos\theta} \qquad \cdots (3)$$

Here, a position of an upper base of a person in the image is denoted by vt, and a position of a lower base is denoted by vb. When the person in the image is in contact with the ground at the position vb of the lower base, y = 0. Therefore, the depth z of the object is obtained by Expression (4).
Math. 4

$$z = \frac{fy_c}{f\sin\theta - (v_c - v_b)\cos\theta} \qquad \cdots (4)$$

By applying the above-described object to the lights LP or the ships SH of this embodiment, the above-described distances D1 and D2 may be estimated using Expression (4). Thus, the estimated distances D1 and D2 can be presented to the ship operator.

When the distance estimator 147 estimates the distances D1 and D2, the display section 12 displays the distances D1 and D2 on the screen as illustrated in FIG. 10. In FIG. 10, the estimated distances D2 between the other ships and the own ship S0 are displayed in green, for example, as "3.5 km" and "2 km". The distances D1 between the estimated lights LP and the own ship S0 are displayed in red, for example, as "5 km", "4.5 km", and "3.5 km". Thus, when the distances D1 and D2 are displayed on the display section 12, the ship operator can immediately grasp the distances between the lights LP and the own ship S0 and the distances between the other ships and the own ship S0.

Note that, when the image CA is obtained by imaging the offshore, the lights LP are highly likely to be the ships SH even when the lights LP are not clearly detected as the ships SH. On the other hand, when the image CA is obtained by imaging the coastal area, the lights LP may be street lamps or a lighthouse on the land, in addition to the ships SH anchored on the coastal area. In any case, the ship operator views the distances D1 and D2 displayed on the display section 12, determines the risk of a collision with the objects in front, and changes the route of the own ship as necessary, thereby ensuring the safety of the navigation of the ship.

The above-described process from S1 to S7 in FIG. 2 is performed until the monitoring in the 24-hour system ends (S8). Thus, the process from S1 to S7 is repeatedly (continuously) performed during the navigation of the ship 100.

As described above, the light detector 143 detects the lights LP in the image CA acquired by the visible light camera 22 (refer to S4 in FIG. 2 and FIG. 4). The navigation support method of this embodiment includes detecting (by the light detector 143) the lights LP based on color information included in the image CA acquired by the visible light camera 22 (S4 in FIG. 2).

In this embodiment, the light detector 143 can identify and detect the lights LP of the other ships in the image CA acquired by the visible light camera 22 even in the nighttime. Thus, even in the nighttime, the horizon detector 144 can detect a horizon based on identification results (detection results) of the detected lights LP (see S5 in FIG. 2, FIG. 5A, and FIG. 6A). Therefore, the ships SH (the other ships) can be detected in the image near the horizon in the nighttime (refer to S6 in FIG. 2 and FIG. 8A). Furthermore, it is not necessary to use an expensive camera, such as an infrared camera, and the ships SH can be detected in the nighttime with an inexpensive configuration using the visible light camera 22.

The following form is preferable in that the ship operator can easily recognize positions of the lights LP by viewing the image CA displayed on the display section 12. That is, as illustrated in FIG. 10, the display section 12 preferably displays the lights LP in an emphasized manner in addition to the image CA. Particularly, from the viewpoint of easily realizing the emphasized display of the lights, as illustrated in FIG. 10, the display section 12 preferably displays frames (second frames F2) surrounding the lights LP.

Since it is dark in the nighttime, the horizon HL may not be detected in the camera image by the same method as in the daytime. In order to enable detection of the horizon HL regardless of day or night, it is necessary to change the method of detecting the horizon HL between daytime and nighttime. Therefore, it is necessary to determine day or night by using the camera image. In this respect, as in this embodiment, a configuration in which the navigation support device 1 includes the day/night determiner 142 is preferable.

In this embodiment, when the plurality of lights LP are included in the image CA, the horizon detector 144 detects the horizon HL based on a distribution of the lights LP (see S522 in FIG. 6A). The distribution of the lights LP can be detected in the image CA acquired by the visible light camera 22. Therefore, when the horizon HL is to be detected in the nighttime, it is not necessary to use a special and expensive camera, such as an infrared camera. In this respect, a configuration in which the navigation support device 1 includes the above-described horizon detector 144 is desirable.

When the number of the lights LP included in the image CA is one, the horizon detector 144 detects the horizon HL based on the pose information of the visible light camera 22 input from the outside (for example, the IMU 26) (see FIG. 5A and S524 in FIG. 6A). When the number of lights included in the image CA is one, the horizon HL may not be detected using the least squares method. In this case, a method of detecting the horizon HL based on the pose information of the visible light camera 22 is effectively used.

The display section 12 displays the horizon HL detected by the horizon detector 144 so as to overlap with the image CA (see FIG. 10). In this case, the ship operator can recognize the position of the horizon HL on the image CA displayed on the display section 12 even in the nighttime. In this respect, the display mode in which the horizon HL is superimposed and displayed on the image CA is preferable.

In order to reliably detect the other ships by the ship detector 146, it is desirable to perform the ship detection by using the image information (image data of individual pixels) of the original image CA as it is. In this regard, as in this embodiment, it is preferable that the partial image extractor 145 extracts portions (regions overlapping with the horizon HL) from the original image CA as the partial images CR, and the ship detector 146 performs the ship detection process by using the extracted partial images CR as inputs (see S61 and S62 in FIG. 8A).

For example, when the original image is reduced, pixels are thinned out in the reduced image as compared with the original image, and thus an amount of information is decreased as compared with the original image. In contrast, in the partial images CR, the pixels are not thinned out from the original image, and information included in the original image is held as it is. Therefore, images (the partial images CR) having large amounts of information can be input to the ship detector 146, and the ship detector 146 can reliably (accurately) perform the ship detection process.

## 5. Determiner of Navigation Support Device

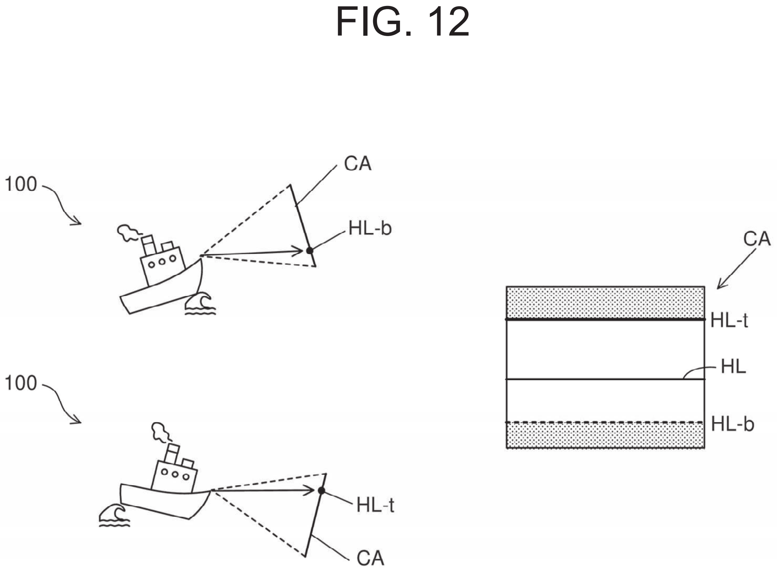

As illustrated in FIG. 1, the navigation support device 1 may include the determiner 148. As illustrated in FIG. 12, the determiner 148 determines whether the horizon HL detected by the horizon detector 144 is located between an upper limit position HL-t and a lower limit position HL-b set in advance in the image CA.

The ship 100 has a limit angle at which the ship 100 can withstand waves on the sea. A position of the horizon HL detected when the ship 100 is shaken by waves, the bow side is inclined upward, and the inclination of the ship 100 reaches the upper limit of the limit angle is defined as the lower limit position HL-b. A position of the horizon HL detected when the ship 100 is shaken by waves, the bow side is inclined downward, and the inclination of the ship 100 reaches the lower limit of the limit angle is defined as the upper limit position HL-t.

In the image CA, it is inappropriate that the detected horizon HL is located in a region above the upper limit position HL-t. This is because the ship 100 is inclined beyond the limit angle. Similarly, it is inappropriate that the detected horizon HL is located in a region below the lower limit position HL-b in the image CA.

The determiner 148 determines whether the horizon HL is located between the upper limit position HL-t and the lower limit position HL-b set in advance, and thus it is possible to determine whether the horizon HL detected by the horizon detector 144 is appropriate, that is, whether the horizon HL is appropriately detected. When the horizon HL has not been appropriately detected, a countermeasure, such as retrying the detection process of the horizon HL by the horizon detector 144, may be taken.

## 6. Calculator of Navigation Support Device

As illustrated in FIG. 1, the navigation support device 1 may include the calculator 149. The calculator 149 calculates a roll, a pitch, and a heave of the own ship (the ship 100) based on the position of the horizon HL in the image CA.

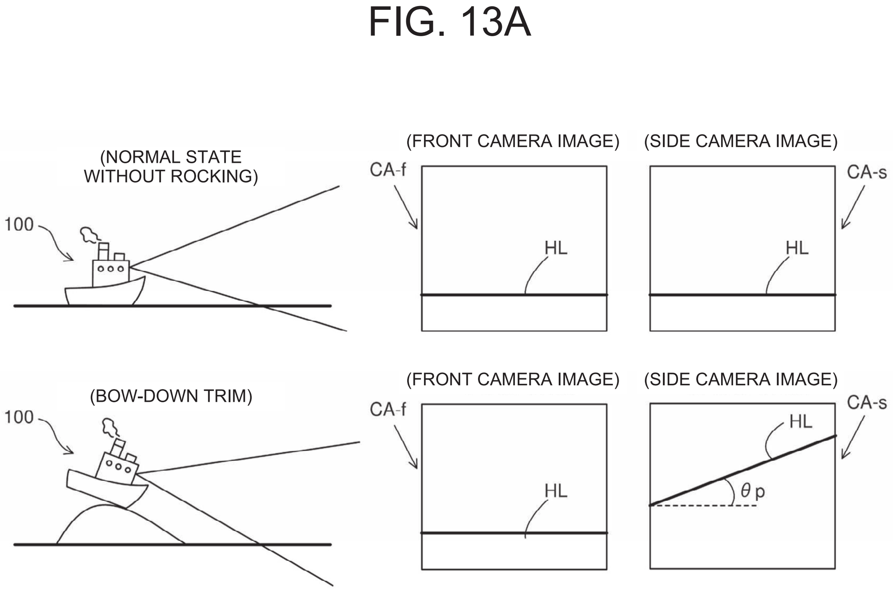

FIG. 13A is an explanatory diagram illustrating a front camera image CA-f and a side camera image CA-s in a normal state where the ship 100 is not rocking and in a state where the bow side is inclined downward. The front camera image CA-f is captured by the camera facing the front among the nine cameras constituting the visible light camera 22. The side camera image CA-s is captured by the camera facing the starboard side (or the port side) among the nine cameras constituting the visible light camera 22.

The roll is represented by an inclination of the horizon HL superimposed and displayed on the front camera image CA-f with respect to the horizontal direction. The pitch is represented by an inclination ($\theta$p) of the horizon HL superimposed and displayed on the side camera image CA-s with respect to the horizontal direction. That is, the calculator 149 can obtain each of the roll and the pitch from the inclination of the horizon HL superimposed and displayed on the front camera image CA-f and the side camera image CA-s.

On the other hand, the calculator 149 can calculate the heave (displacement in the up-down direction) based on the technique described in Document B which is the known document described above. Hereinafter, a method of calculating the heave will be described.

The heave corresponds to an installation height yc of the camera in Expression (2) described above. That is, the heave can be obtained by obtaining yc.

The height y is represented by Expression (3) described above. When Expression (3) is expressed by yc, the following Expression (5) is obtained.
Math. 5

$$y_c = \frac{z(f \sin\theta - (v_c - v)\cos\theta) - y((v_c - v)\sin\theta + f\cos\theta)}{f}$$

$$\cdots (5)$$

Assuming that the ship is horizontal ($\theta$ = 0), the following Expression (6) is obtained.
Math. 6

$$y_c = \frac{z(v + v_c) - yf}{f} \qquad \cdots (6)$$

Furthermore, when an image coordinate v in Expression (6) is the horizon, y = 0. Therefore, when the distance z to the horizon is obtained, the heave is obtained by the following Expression (7).
Math. 7

$$y_c = \frac{z(v + v_c)}{f} \qquad \cdots (7)$$

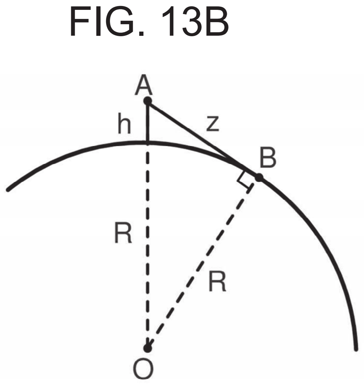

As for a distance z to the horizon, a method using a height of a viewpoint and the radius of the earth is employed. FIG. 13B is an explanatory diagram schematically illustrating the distance z (distance AB) from a person to the horizon when the person having a height h is standing on the earth with the radius R. When the geometric relationship in FIG. 13B is expressed by variables used herein, the following Expression (8) is obtained.
Math. 8

$$z = \sqrt{2Ry_c - y_c^2} \qquad \cdots (8)$$

Here, yc2 is sufficiently smaller than the radius R of the earth, and thus can be ignored. When Expression (8) is transformed with respect to yc, the following Expression (9) is obtained.
Math. 9

$$y_c = \frac{z^2}{2R} \qquad \cdots (9)$$

When Expression (9) is substituted into Expression (7) and solved for z, the following Expression (10) is obtained.
Math. 10

$$z \quad = \frac{2R(v + vc)}{f} \qquad \cdots (10)$$

By substituting Expression (10) into Expression (7) again, yc is obtained.

The heave when the ship 100 is moving is obtained as follows. In Expression (5), the pitch angle detected by IMU 26 is assigned as a value of θ. Then, a value (y = 0) of the horizon HL detected by the horizon detection process is assigned to the image coordinates v.

Since the calculator 149 calculates a roll, a pitch, and a heave of the own ship as described above, for example, the calculated roll and the like can be displayed on the display section 12 to allow the ship operator to grasp the pose of the ship.

7. Supplementary Notes

The horizon detector 144 may detect the horizon HL based on the lights LP detected by the light detector 143 and nautical chart information stored in the database 3 (refer to FIG. 1). From the nautical chart information, positions of the land and lighthouses are obtained. Therefore, the horizon detector 144 can remove, for example, the land and lights of the lighthouses as noise from the lights LP detected by the light detector 143, and detect the horizon HL from the remaining lights LP. Accordingly, the detection accuracy of the horizon HL is improved.

Furthermore, the horizon detector 144 may detect the horizon HL based on the lights LP detected by the light detector 143 and positional information of other ships that is periodically received. The positional information of the other ships is periodically received by the own ship concerned as AIS information. The horizon detector 144 can determine, based on the received positional information of the other ships, whether the lights LP included in the image CA are lights of the other ships, in other words, whether the lights LP are not the lights of the lighthouses or the land that are determined as noise. Then, when the lights LP are lights of the other ships, the horizon HL can be accurately detected based on the lights LP.

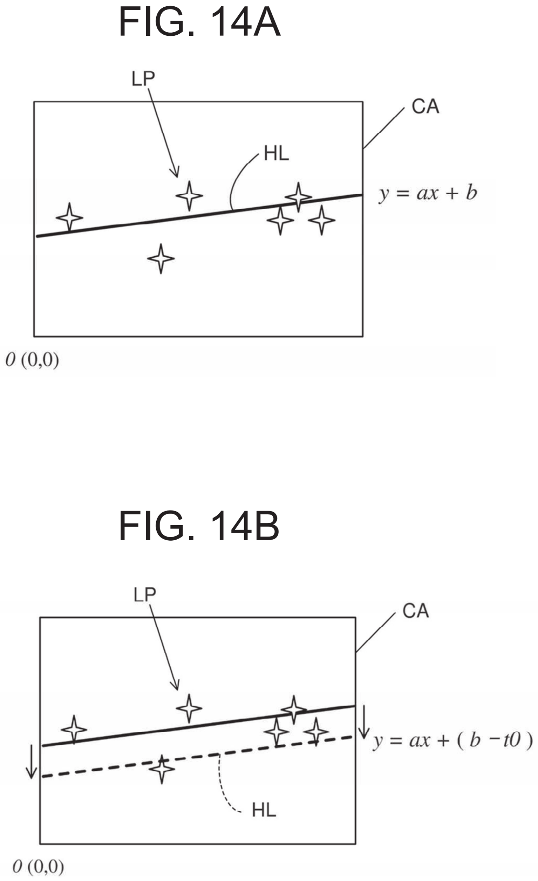

The horizon detector 144 may correct the horizon HL downward by a predetermined amount in the image CA. FIG. 14A is an explanatory diagram schematically illustrating the image CA before the detected horizon HL is corrected. FIG. 14B is an explanatory diagram schematically illustrating an image CA after the detected horizon HL is corrected.

Generally, in the nighttime, lights are turned on above a water surface with respect to ships. Therefore, the horizon HL detected based on the lights LP in the image CA is highly likely to be located above an actual horizon. Therefore, as illustrated in FIG. 14B, the horizon HL is corrected downward by an offset value t0 (predetermined amount) set in advance in the image CA, so that a position of the detected horizon HL can be brought closer to an actual position of the horizon. That is, in order to obtain the horizon HL more accurately, it is desirable to correct the horizon HL detected as described above downward by a predetermined amount.

8. Program

The navigation support device 1, which has been described in this embodiment, may be configured by a computer (PC) in which a predetermined program (application software) is installed, for example. When the computer (for example, the controller 14) reads and executes the program, each of the sections in the navigation support device 1 is operated, and thus the processes (the steps) described above can be executed. Such a program is downloaded from the outside via a network and stored in the storage 13, for example. Furthermore, the program may be recorded in a computer-readable recording medium, such as a compact disk-read only memory (CD-ROM) or a portable nonvolatile memory, and the program may be read by the computer from this recording medium and stored in the storage 13. That is, the program in this embodiment is for causing the computer to execute the navigation support method in this embodiment. The recording medium of this embodiment is a computer-readable non-transitory recording medium recording the program.

9. Appendices

The navigation support device, the ship, the navigation support method, and the navigation support program described in this embodiment may also be expressed as follows.

A navigation support device of Appendix 1 that supports navigation of a ship includes

a light detector that detects a light based on color information included in an image acquired by a visible light camera.

In Appendix 2, the navigation support device according to Appendix 1 further includes

a display section that displays the image, wherein
the display section displays the light in an emphasized manner in addition to the image.

In Appendix 3, in the navigation support device according to Appendix 2,
the display section displays a frame surrounding the light.

In Appendix 4, the navigation support device according to any one of Appendices 1 to 3 further includes
a day/night determiner that determines day or night based on the color information.

In Appendix 5, the navigation support device according to any one of Appendices 2 to 4 further includes
a horizon detector that, when the number of lights included in the image is plural, detects a horizon based on a distribution of the lights.

In Appendix 6, in the navigation support device according to Appendix 5,
when the number of lights included in the image is one, the horizon detector detects the horizon based on pose information of the visible light camera input from the outside.

In Appendix 7, in the navigation support device according to any one of Appendices 5 and 6,
the display section displays the horizon detected by the horizon detector such that the horizon is superimposed on the image.

In Appendix 8, the navigation support device according to any one of Appendices 5 to 7 further includes

a partial image extractor that extracts, from the image, a partial image that includes the light and that overlaps with the horizon, and
a ship detector that detects, when the extracted partial image is input, an other ship included in the partial image.

In Appendix 9, the navigation support device according to any one of Appendices 5 to 8 further includes
a determiner that determines whether the horizon detected by the horizon detector is located between an upper limit position and a lower limit position set in advance in the image.

In Appendix 10, the navigation support device according to any one of Appendices 5 to 9 further includes
a calculator that calculates a roll, a pitch, and a heave of the own ship based on a position of the horizon in the image.

In Appendix 11, in the navigation support device according to any one of Appendices 5 to 10,
the horizon detector detects the horizon based on the light and nautical chart information.

In Appendix 12, in the navigation support device according to any one of Appendices 5 to 11,
the horizon detector detects the horizon based on the light and positional information of an other ship that is periodically received.

In Appendix 13, in the navigation support device according to any one of Appendices 5 to 12,
the horizon detector corrects the horizon downward by a predetermined amount in the image.

In Appendix 14, the navigation support device according to any one of Appendices 5 to 13 further includes
a distance estimator that estimates a distance between the light and the own ship based on a relative position between the horizon and the light.

In Appendix 15, in the navigation support device according to Appendix 14,
the display section displays the distance.

A ship of Appendix 16 includes
the navigation support device according to any one of Appendices 1 to 15.

A navigation support method of Appendix 17 for supporting navigation of a ship includes
detecting a light based on color information included in an image acquired by a visible light camera.

A navigation support program of Appendix 18 causes a computer to execute the navigation support method according to Appendix 17.

Although the embodiment of the present invention has been described above, the scope of the present invention is not limited thereto, and the present invention can be implemented by expanding or changing it without departing from the gist of the invention.

INDUSTRIAL APPLICABILITY

The present invention is applicable to, for example, a system that monitors the surroundings of a ship for 24 hours.

REFERENCE SIGNS LIST

1 navigation support device
12 display section
22 visible light camera
100 ship (own ship)

142 day/night determiner
143 light detector
144 horizon detector
145 partial image extractor
146 ship detector
147 distance estimator
148 determiner
149 calculator
CA image
CR partial image
F2 second frame
HL horizon
HL-t upper limit position
HL-b lower limit position
D2 distance
LP light
S0 own ship
SH ship (other ship)
to offset value (predetermined value)

**Claims**

1. A navigation support device that supports navigation of a ship, the navigation support device comprising:
a light detector that detects a light based on color information included in an image acquired by a visible light camera.

2. The navigation support device according to claim 1, further comprising:

   a display section that displays the image, wherein
   the display section displays the light in an emphasized manner in addition to the image.

3. The navigation support device according to claim 2, wherein the display section displays a frame surrounding the light.

4. The navigation support device according to claim 1, further comprising a day/night determiner that determines day or night based on the color information.

5. The navigation support device according to claim 2, further comprising a horizon detector that, when the number of lights included in the image is plural, detects a horizon based on a distribution of the lights.

6. The navigation support device according to claim 5, wherein, when the number of lights included in the image is one, the horizon detector detects the horizon based on pose information of the visible light camera input from the outside.

7. The navigation support device according to claim 5, wherein the display section displays the horizon detected by the horizon detector such that the horizon is superimposed on the image.

8. The navigation support device according to claim 5, further comprising:

   a partial image extractor that extracts, from the image, a partial image that includes the light and that overlaps with the horizon; and
   a ship detector that detects, when the extracted partial image is input, an other ship included in the partial image.

9. The navigation support device according to claim 5, further comprising a determiner that determines whether the horizon detected by the horizon detector is located between an upper limit position and a lower limit position set in advance in the image.

10. The navigation support device according to claim 5, further comprising a calculator that calculates a roll, a pitch, and a heave of the own ship based on a position of the horizon in the image.

11. The navigation support device according to claim 5, wherein the horizon detector detects the horizon based on the light and nautical chart information.

12. The navigation support device according to claim 5, wherein the horizon detector detects the horizon based on the light and positional information of an other ship that is periodically received.

13. The navigation support device according to claim 5, wherein the horizon detector corrects the horizon downward by a predetermined amount in the image.

14. The navigation support device according to claim 5, further comprising a distance estimator that estimates a distance between the light and the own ship based on a relative position between the horizon and the light.

15. The navigation support device according to claim 14, wherein the display section displays the distance.

16. A ship comprising the navigation support device according to any one of claims 1 to 15.

17. A navigation support method for supporting navigation of a ship, the navigation support method comprising: detecting a light based on color information included in an image acquired by a visible light camera.

18. A navigation support program causing a computer to execute the navigation support method according to claim 17.

FIG. 1

# FIG. 2

START

ACQUIRE CAMERA IMAGE — S1

NIGHT? — S2

Y / N

LIGHT DETECTION PROCESS — S4

DAYTIME HORIZON DETECTION PROCESS — S3

NIGHTTIME HORIZON DETECTION PROCESS — S5

SHIP DETECTION PROCESS — S6

DISTANCE ESTIMATION PROCESS — S7

END OF MONITORING (DATA ACQUISITION)? — S8

N / Y

END

# FIG. 3A

# FIG. 3B

DETERMINATION PROCESS $\sum_{i=0}^{t-1} Y_i \leq \sum_{j=t}^{255} Y_j$    True   DAY
                                                            False   NIGHT

# FIG. 4

START

ACQUIRE IMAGE — S41

EXTRACT HUE — S42

REMOVE NOISE — S43

GRAYSCALE — S44

BINARIZE — S45

EROSION AND DILATION — S46

EXTRACT CONTOUR — S47

CENTROID CALCULATION — S48

END

# FIG. 5A

START

ACQUIRE CAMERA POSE INFORMATION — S511

ESTIMATE HORIZON POSITION BASED ON CAMERA POSE — S512

OUTPUT HORIZON POSITION — S513

END OF DATA ACQUISITION? — S514

N

Y

END

# FIG. 5B

SIDE VIEW                    CAMERA IMAGE

CA

HL=h0

VP

26

# FIG. 5C

SIDE VIEW                    CAMERA IMAGE

CA

HL

VP

ΔH

h0

26

# FIG. 6A

START

TWO LIGHTS OR MORE? — S521

N

Y

DETERMINE STRAIGHT LINE ACQUIRED BY POSE SENSOR AS HORIZON INFORMATION — S524

SOLVE MINIMIZATION PROBLEM USING COORDINATES OF LIGHTS TO ESTIMATE STRAIGHT LINE — S522

DETERMINE ACQUIRED STRAIGHT LINE AS HORIZON INFORMATION — S523

END

# FIG. 6B

# FIG. 6C

# FIG. 7

# FIG. 8A

START

EXTRACT IMAGE REGION INCLUDING HORIZON AND LIGHT — S61

INPUT EXTRACTED IMAGE TO SHIP DETECTOR TO DETECT SHIP — S62

TRANSMIT AND DISPLAY DETECTION RESULT TO DISPLAY DEVICE — S63

END

# FIG. 8B

# FIG. 8C

# FIG. 9

# FIG. 10

# FIG. 11

Image Coordinates

World Coordinates

EP 4 768 863 A1

# FIG. 12

EP 4 768 863 A1

FIG. 13A

# FIG. 13B

# FIG. 14A

LP

CA

HL

$y = ax + b$

$0 (0,0)$

# FIG. 14B

LP

CA

$y = ax + (b - t0)$

HL

$0 (0,0)$

Europäisches
Patentamt
European
Patent Office
Office européen
des brevets

# EUROPEAN SEARCH REPORT

**Application Number**

EP 25 22 2563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 654 233 A1 (BSB ARTIFICIAL INTELLIGENCE GMBH [AT]) 20 May 2020 (2020-05-20) * paragraph [0009] - paragraph [0010] * * paragraph [0017] * * paragraph [0019] * * paragraph [0022] * * paragraph [0026] * * paragraph [0041] - paragraph [0046] * * paragraph [0061] * * paragraph [0069] * * paragraph [0071] - paragraph [0072] * * paragraph [0081] * * paragraph [0083] * * paragraph [0088] - paragraph [0090] * * figures 1-2 * ----- | 1-18 | INV. G01C21/20 ADD. G06T7/73 G06V10/40 G06V10/56 G08G3/00 |

**TECHNICAL FIELDS SEARCHED (IPC)**

G06F
G06T
G01C
G06V
G08G

The present search report has been drawn up for all claims

| Place of search | Date of completion of the search | Examiner |
|---|---|---|
| The Hague | 18 May 2026 | Faivre, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 2563

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2026

| Patent document cited in search report | | Publication date | Patent family member(s) | | Publication date |
|---|---|---|---|---|---|
| EP 3654233 | A1 | 20-05-2020 | EP | 3654233 A1 | 20-05-2020 |
| | | | EP | 3881220 A1 | 22-09-2021 |
| | | | EP | 3881221 A1 | 22-09-2021 |
| | | | ES | 3050833 T3 | 23-12-2025 |
| | | | ES | 3052821 T3 | 14-01-2026 |
| | | | US | 2022004761 A1 | 06-01-2022 |
| | | | US | 2022024549 A1 | 27-01-2022 |
| | | | WO | 2020099015 A1 | 22-05-2020 |
| | | | WO | 2020099016 A1 | 22-05-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002216139 A

**Non-patent literature cited in the description**

- **RYOTA YONEYAMA** ; **YUICHIRO DAKE**. Vision-Based Maritime Object Detection Covering Far and Tiny Obstacles. *IFAC-PapersOnLine*, 2022, vol. 55 (31), 210-215

- A Method for Estimation of 3D Position and Camera Self-Calibration Using Results of Human Detection. *IEEJ Transactions on Industry Applications*, 01 April 2011, vol. 131 (4), ISSN 1348-8163, 482-489